# EUROPEAN PATENT APPLICATION

(11) **EP 1 541 208 A1**
(43) Date of publication of application: **15.06.2005**
(21) Application number: 04256342.9
(22) Date of filing: 14.10.2004
(51) Int. Cl.: A63F 13/00

(54) **System and method for utilizing vectors in a video game**

(30) Priority: 22.10.2003 US 691929; 15.12.2003 US 737143
(71) Applicant: Sony Computer Entertainment America Inc., Foster City, CA 94404-2175 (US)
(72) Inventor: Campbell, Scott, Foster City, CA 94404-2175 (US)
(74) Representative: DeVile, Jonathan Mark, Dr.

(57) **Abstract**

A system and method for recording and displaying vectors along a graphical path in a video game is provided. Upon initiation of a video game event, a player views vectors associated with the game paths of one or more player characters. The vectors may be net resultant force vectors generated in real time that act on each player character to determine each player character's dynamics of motion. Furthermore, the vectors may be net resultant force vectors associated with a previous game path, such as a "best time" path. The previous game path may comprise a "worst time" path and an "average time" path. Additionally, the net resultant force vectors may convey player character state travel information via one or more colors. In one embodiment of the present invention, the player may gauge game progress, future game maneuvers, and obstacle avoidance via observation of the net resultant force vectors.

## Description

### BACKGROUND OF THE INVENTION

### 1. Field of the Invention

This invention relates generally to computer-generated images and more particularly to a system and method for utilizing vectors in a video game.

### 2. Description of the Background Art

One appealing aspect of video games is competition. Presently video game developers develop games that capitalize upon the competitive nature of many game players by recording aspects of a previous run, and then allowing subsequent game players access to previous run data. That is, subsequent players may compete against performances of previous players. The previous run may be, for example, based upon a fastest time, most points accumulated, a most efficient use of player character energy reserves, or any combinations of these or other attributes.

In such video games, a player character associated with a previous run may be simultaneously displayed with a current player character on a graphical display. Thus, a current player may observe a position of the player character associated with the previous run, and directly compete with this previous character. Although the current player may observe a single position of the previous character at any given time, the current player does not observe data associated with a path of the previous character. A current player character with access to path data associated with a previous run may be able to use the path data during game play.

It would be advantageous to implement a system and method for recording and dynamically displaying data along a graphical path associated with a previous game run, such as a previous "best game" run, thereby allowing a subsequent player of the video game to base competitive game decisions upon a previous game graphical path, and other data associated with the previous game graphical path.

### SUMMARY OF THE INVENTION

Various aspects and features of the present invention are defined in the appended claims.

In accordance with embodiments of the present invention, a system and method is disclosed for utilizing vectors in a video game. The method comprises initiating a current video game session, computing vectors along one or more graphical paths of the video game, where each of the graphical paths are associated with a player character of the video game, and displaying the plurality of vectors along the graphical paths. In a further embodiment of the present invention, the method comprises computing net resultant force vectors, where the vectors are computed in real time and are based upon phenomenological and/or physical laws of nature.

In another embodiment of the present invention, the method comprises retrieving graphical path data associated with one or more previous runs, displaying the graphical path data as a string of vectors, and determining a color for each vector based upon an elapsed time of the current video game session and an elapsed time associated with the vector. In addition, the color of each vector may be based upon a player character state. The player character state represents a state of the player character, and includes states such as an "on the ground" state, an "airborne" state, and a "crashed" state."

A system of the present invention comprises a data cache configured to store graphical path data associated with a current video game session and one or more previous video game sessions, a processor configured to compute a plurality of force vectors associated with one or more graphical paths, and a display device configured to display the plurality of force vectors. In a further embodiment, the processor is configured to compute a color of a force vector from the plurality of force vectors, where the color of each force vector indicates a player character state.

In further embodiments of the present invention, the graphical path data may be associated with previous game runs, including, but not limited to, previous "best time" runs, previous "worst time" runs, previous "average time" runs, and selectively chosen runs associated with a current game player or other game players.

### BRIEF DESCRIPTION OF THE DRAWINGS

The invention will now be described by way of example with reference to the accompanying drawings, throughout which like parts are referred to by like references, and in which:
FIG. 1 is an exemplary block diagram of one embodiment of an electronic entertainment system, according to the present invention;
FIG. 2 is an exemplary block diagram of one embodiment of the data cache of FIG. 1;
FIG. 3A illustrates a bicycle on a roadway surface, according to an exemplary example of the present invention;
FIG. 3B illustrates forces acting in the y-z plane on a wheel of the bicycle illustrated in FIG. 3A;
FIG. 3C illustrates forces acting in the x-z plane on the wheel of the bicycle illustrated in FIG. 3A;
FIG. 3D shows a summation of the forces acting on the wheel illustrated in FIG. 3B;
FIG. 3E shows a summation of the forces acting on the wheel illustrated in FIG. 3C;
FIG. 3F shows a net resultant force acting on the wheel of the bicycle as a summation of the forces illustrated in FIG. 3D and FIG. 3E;
FIG. 4 is an exemplary screen-shot of net resultant force vectors as displayed at a given time during a game run from a vantage point of a player character A, according to one embodiment of the invention;
FIG. 5A is an illustration of path markers as displayed at a beginning of a time-trial run, according to one embodiment of the present invention;
FIG. 5B is an illustration of path markers as displayed after an elapsed time *t*_{*1*} from a start of the time-trial run as displayed in FIG. 5A, according to one embodiment of the present invention;
FIG. 5C is an illustration of path markers as displayed after an elapsed time *t*_{*2*} from a start of the time-trial run as displayed in FIG. 5A, according to another embodiment of the present invention;
FIG. 5D is an illustration of path markers as displayed after an elapsed time *t*_{*3*} from a start of the time-trial run as displayed in FIG. 5A, according to yet another embodiment of the present invention;
FIG. 5E is an exemplary screen-shot of path markers as displayed after an elapsed time *t*_{*4*} from a beginning of a time-trial run; and
FIG. 6 is a flowchart of method steps for recording and displaying vectors along a graphical path, according to one embodiment of the present invention.

### DETAILED DESCRIPTION OF EXEMPLARY EMBODIMENTS

In a video game, a game player maneuvers a player character through a game environment from a starting point to an end point. For example, the player character traverses a racecourse in a time trial mode. Video game software records a path of the player character as it moves from the starting point to the end point. The path is recorded as a series of points represented by (x,y,z) Cartesian coordinates, for example. The game software also records a total time that it takes the player character to arrive at the end point and an elapsed time to each point in the path. For example, the elapsed time may be measured from an initial starting time associated with the starting point. The game software may also record other data at each point along the player character's path including, but not limited to, a magnitude and a direction of each force acting on the player character, an instantaneous energy consumption by the player character, a total energy consumption by the player character, and a player character travel state. In one embodiment of the present invention, the player character travel state may indicate that the character is "airborne," "on the ground," or "crashed." Other player character states may be utilized in further embodiments.

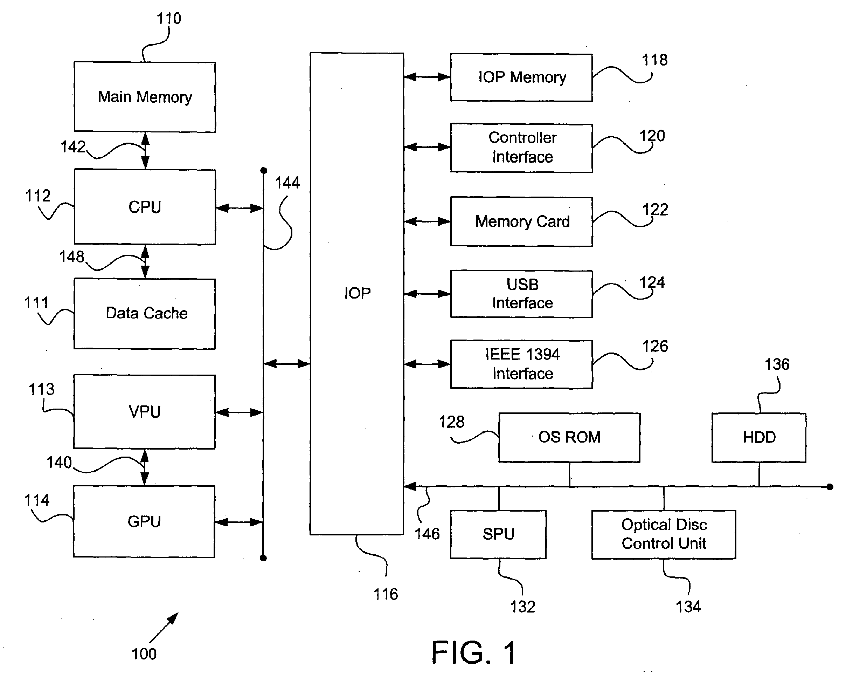

FIG. 1 is an exemplary block diagram of an electronic entertainment system 100, according to one embodiment of the present invention. The system 100 comprises a main memory 110, a central processing unit (CPU) 112, a data cache 111, a vector processing unit VPU 113, a graphics processing unit (GPU) 114, an input/output processor (IOP) 116, an IOP memory 118, a controller interface 120, a memory card 122, a Universal Serial Bus (USB) interface 124, and an IEEE 1394 interface 126. The system 100 also comprises an operating system read-only memory (OS ROM) 128, a sound processing unit (SPU) 132, an optical disc control unit 134 and a hard disc drive (HDD) 136, which are connected via a bus 146 to the IOP 116. The system 100 is preferably an electronic gaming console; however, the system 100 may also be implemented as any type of general-purpose computer, set-top box or hand-held gaming device. Alternative embodiments of the system 100 may comprise fewer, more, or other components.

A user of the system 100 provides instructions via the controller interface 120 to the CPU 112. For example, the user may instruct the CPU 112 to store certain game information on the memory card 122 or may instruct a character in a game to perform some specified action. Other devices may be connected to the system 100 via the USB interface 124 and the IEEE 1394 interface 126.

The CPU 112, the VPU 113, the GPU 114 and the IOP 116 communicate via a system bus 144. The CPU 112 communicates with the main memory 110 via a dedicated bus 142, and with the data cache 111 via a dedicated bus 148. The VPU 113 and the GPU 114 may also communicate via a dedicated bus 140. The CPU 112 executes programs stored in the OS ROM 128 and the main memory 110. The main memory 110 may contain pre-stored programs and may also contain programs transferred via the IOP 116 from a CD-ROM, a DVD-ROM or other optical disc (not shown) using the optical disc control unit 134. The IOP 116 controls data exchanges between the CPU 112, the VPU 113, the GPU 114 and other devices of the system 100, such as the controller interface 120. The SPU 132 executes instructions to produce sound signals that are output on an audio device (not shown). Alternative embodiments may provide different communication paths between the various components.

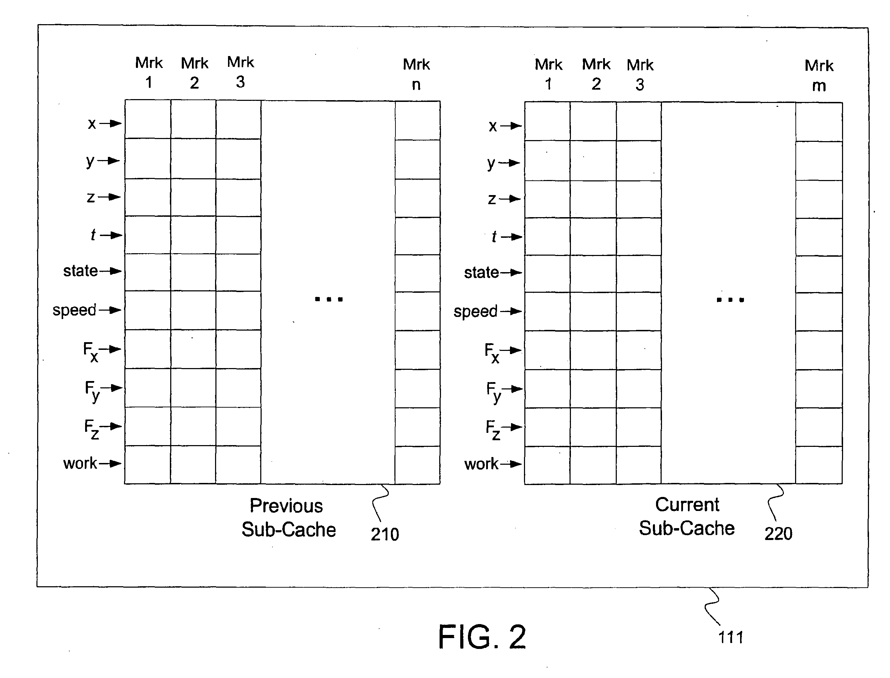

In one embodiment of the present invention, the CPU 112 stores and retrieves data associated with previous paths or runs (such as a "best time" run) in the data cache 111. The data cache 111 is discussed further below in conjunction with FIG. 2. For example, the CPU 112 may retrieve data associated with a "best time" path generated by a developer of the game software and permanently stored on a game disc. The CPU 112 may instruct the optical disc control unit 134 to read the game disc. Thus, players may test themselves against the "best time" and learn an efficient path through the game environment. In addition, a player's "best time" path or any other paths may be stored on the memory card 122, such as a removable flash card. The player then has an option, upon initiation of a new game session, of either racing against a "best time" path as stored on the memory card 122 or any other recorded path.

When the player begins a new run of a racecourse, the game software retrieves recorded data associated with a selected previous run, and then displays the data on a game screen as the character moves through the game environment, allowing the player character to race against the selected previous run. The GPU 114 executes drawing instructions from the CPU 112 and the VPU 113 to produce images for display on a display device (not shown). Typically, the VPU 113 transforms objects from three-dimensional coordinates to two-dimensional coordinates, and sends the two-dimensional coordinates to the GPU 114.

In one embodiment of the present invention, the game software displays the data associated with the previous run, such as previous run data, as a string of dynamically changing colored path markers situated in the game environment. In another embodiment of the present invention, the string of colored path markers displays a game developer's "best time" path through the game environment. In a further embodiment, the string of colored path markers displays a previous run path through the game environment by one game player from a group of game players.

In a further embodiment of the present invention, a path marker's color conveys information. For example, when the player selects a racecourse, the game software retrieves recorded data associated with a "best time" path before the current player character begins a time trial run, and displays a string of path markers. Each path marker of the string of path markers is initially a color c₀. In one embodiment of the present invention, the color c₀ is gray. However, any color may represent the color c₀. In this embodiment, a path marker colored gray indicates that a player character associated with the "best time" run (hereinafter referred to as the "best time" player character) has not yet reached the path marker's position at a given elapsed time. Thus at any given elapsed time during game play, if the current player character is ahead of the "best time" player character, then the current player observes a string of path markers colored gray that represents the "best time" path.

However, if the current player character is behind the "best time" player character at any given elapsed time, then the current player observes path markers of a different color. For example, a path marker may change from the color c₀ to a color c₁ when the "best time" player character is positioned at the path marker and is traveling on the ground. In addition, a path marker may change from the color c₀ to a color c₂ when the "best time" player character is positioned at the path marker and is traveling in the air. Finally, a path marker may change from the color c₀ to a color c₃ when the "best time" player character is positioned at the path marker and is crashed. In exemplary embodiments of the present invention, the color c₁ is green, the color c₂ is blue, and the color c₃ is red. The scope of the present invention covers other colors for the above-described path markers. Further, other colored path markers may represent alternate player character states, such as an energy level, an applied force magnitude, and an applied force direction, for example.

FIG. 2 is an exemplary block diagram of one embodiment of the data cache 111 of FIG. 1. The exemplary data cache 111 comprises a previous sub-cache 210 and a current sub-cache 220. The previous sub-cache 210 stores data associated with *n* path markers of a previous run, where *n* is an integer. In one embodiment of the present invention, the previous sub-cache 210 is a "best time" sub cache which stores data associated with *n* path markers of a previous "best time" run. In contrast, the current sub-cache 220 stores data generated during a current time-trial run, where the data is associated with *m* path markers, and *m* is an integer. Using path marker 1 (i.e., Mrk 1) of the previous sub-cache 210 as an illustrative example of data associated with any path marker, the previous sub-cache 210 may store any of the following data: an x-position of path marker 1, a y-position of path marker 1, a z-position of path marker 1, an elapsed time *t* at path marker 1, a player character state at path marker 1, a player character speed and/or velocity at path marker 1, an x-component of a net resultant force (Fₓ) acting on the player character at path marker 1, a y-component of a net resultant force (F_{y}) acting on the player character at path marker 1, a z-component of a net resultant force (F_{z}) acting on the player character at path marker 1, and an instantaneous work performed by the net resultant forces (Fx, Fy, Fz) on the player character at path marker 1. The player character state at path marker 1 identifies a state of the player character. For example, player character states include, but are not limited to, on the ground, in the air, and crashed. Alternate embodiments of the previous sub-cache 210 may comprise more, less, and/or other data associated with any path marker. The current sub-cache 220 comprises similar data categories as the previous sub-cache 210, and thus the current sub-cache 220 will not be described in detail. In a further embodiment of the present invention, the data cache 111 comprises a plurality of sub-caches (not shown) in which each sub-cache of the plurality of sub-caches may store data associated with previous game runs, which may include a "best time" run.

In an exemplary "best time" embodiment of the present invention, the CPU 112 (FIG. 1) executes the video game software. In this embodiment of the present invention, the previous sub-cache 210 is a "best time" sub-cache 210. The CPU 112 generates and records path markers based upon a distance a player character travels. For example, upon initiation of a time-trial run, when a "best time" path does not yet exist, the CPU 112 executes video game instructions that determine when a player character has traveled a predefined distance s from a starting point. The CPU 112 then generates a path marker 1 associated with the distance s, and may store the following data associated with the path marker 1 in the "best time" sub-cache 210 (FIG. 2): (x,y,z) coordinates of the path marker 1, an elapsed time *t* at the path marker 1, a player character state at the path marker 1, a player character speed at the path marker 1, net resultant forces (Fx,Fy,Fz) acting on the player character at the path marker 1, and an instantaneous work performed by the player character at the path marker 1. According to exemplary embodiments of the present invention, the player character state may indicate whether the player character is on the ground, in the air, or crashed at the path marker 1. Alternative embodiments may comprise additional or different states.

As the player character proceeds along the time-trial run for the above example, the CPU 112 repeats the above-described process of generating and storing data associated with new path markers in the "best time" sub-cache 210. Preferably, each new path marker is located at a predefined player character travel distance s from a previous path marker position.

Continuing with the above example, in one embodiment of the present invention, if the player character crashes before the player character travels the predefined distance s measured from the previous path marker, then the CPU 112 generates a path marker at or near the crash site, and stores the data associated with the crash site path marker in the "best time" sub-cache 210.

In an alternate embodiment of the present invention, the CPU 112 generates and stores data associated with new path markers in the "best time" sub-cache 210, where new path markers are separated by a predefined time interval.

In one embodiment, if the player decides to repeat the time-trial run, the CPU 112 retrieves the data from the "best time" sub-cache 210, and displays a string of path markers on the display device (not shown). The string of path markers indicates the player character's path recorded during the "best time" run, for example. In one embodiment of the present invention, the "best time" path markers initially have a color c₀. As the current player character initiates the repeat time-trial run, the CPU 112 generates and records current path markers and data associated with the current path markers to the current sub-cache 220.

Further, during the repeat time-trial run the CPU 112 compares a current elapsed time with an elapsed time t retrieved from the "best time" sub-cache 210. For each "best time" path marker with an associated elapsed time *t* that is less than the current elapsed time, the CPU 112 changes the "best time" path marker color based upon the "best time" player character state associated with the "best time" path marker. For example, if the "best time" player character state indicates that the "best time" player character is on the ground at a given path marker, then the CPU 112 instructs the GPU 114 to change the color of the given path marker from c₀ to c₁. Similarly, if the "best time" player character state indicates that the "best time" player character is in the air at the given path marker, then the CPU 112 instructs the GPU 114 to change the color of the given path marker from c₀ to c₂. Finally, if the "best time" player character state indicates that the "best time" player character crashed at the given path marker, then the CPU 112 instructs the GPU 114 to change the color of the given path marker from c₀ to c₃.

At the end of the repeat time-trial run, the CPU 112 compares an elapsed time *t* associated with the marker *m* from the current sub-cache 220 (also referred to as a total elapsed time) with an elapsed time *t* associated with the marker *n* from the "best time" sub-cache 210 (also referred to as a "best time" total elapsed time). If the total elapsed time from the repeat time-trial run is less than the "best time" total elapsed time, then the CPU 112 overwrites data of the "best time" sub-cache 210 with data of the current sub-cache 220. Thus, data from the repeat time-trial run is now stored in the "best time" sub-cache 210. Subsequently, data generated from subsequent time-trial runs and stored in the current sub-cache 220 are compared to data stored in the "best time" sub-cache 210.

In an alternate embodiment, data associated with a "best time" run may already be stored or predetermined in the "best time" sub-cache 210 prior to initiation of the time-trial run. In this embodiment, upon initiation of the time trail run, the CPU 112 retrieves the data from the "best time" sub cache 210 and displays a string of path markers on the display device (not shown) that indicate a path of a "best time" player character.

In exemplary embodiments of the present invention, the CPU 112 computes a net resultant force acting on the player character at each of the path markers generated during the time-trial run. In one embodiment of the present invention, the net resultant force comprises Cartesian components (Fx, Fy, Fz). However, the scope of the invention covers net resultant force components defined with respect to any coordinate system. These forces may be based upon the governing laws of physics and/or any artificially contrived laws. For example, the CPU 112 may compute the net resultant forces based upon phenomenological laws (i.e., contrived physical laws) that dictate motion of a player character as the player character collides with extraneous objects, for example. Extraneous objects comprise any objects within a game environment, but external to the player character. For example, given that the player character is a rider on a bicycle, extraneous objects may include, but are not limited to, a roadway surface, rocks, ledges, holes, bumps, walls, other game characters, and other player characters. In this embodiment of the present invention, the game software comprises phenomenological laws which the CPU 112 processes to direct the motion of the player character when the player character interacts with an extraneous object. For example, if the player character hits a rock, the CPU 112 retrieves from main memory 110 (FIG. 1) a phenomenological law associated with hitting a rock, and uses the phenomenological law and other variables and/or constants retrieved from the main memory 110 or the data cache 111 (e.g., speed and mass of the player character) to compute a net resultant force acting on the player character from the impact with the rock.

In addition, the CPU 112 may compute net resultant forces based upon real laws of nature, such as the law of gravity, or laws based upon water and wind resistance. For example, resistive frictional forces, such as water and wind resistance forces, may depend upon a shape and a size of a player character or of apparel worn by the player character.

In a further embodiment of the present invention, the CPU 112 may compute net resultant forces based upon a combination of phenomenological laws and real laws of nature. For example, if a bicycle hits a wall, the CPU 112 may compute a gravitational force, a frictional wind force, and a phenomenological impact force due to a collision with the wall. The CPU 112 then computes a net resultant force acting on the bicycle as a vector sum of the gravitational force, wind force, and impact force. The CPU 112 may then instruct the GPU 114 (FIG. 1) to display the net resultant force on the display device (not shown) and/or may store the net resultant force in the data cache 111 (FIG. 1) for retrieval and display during subsequent game play.

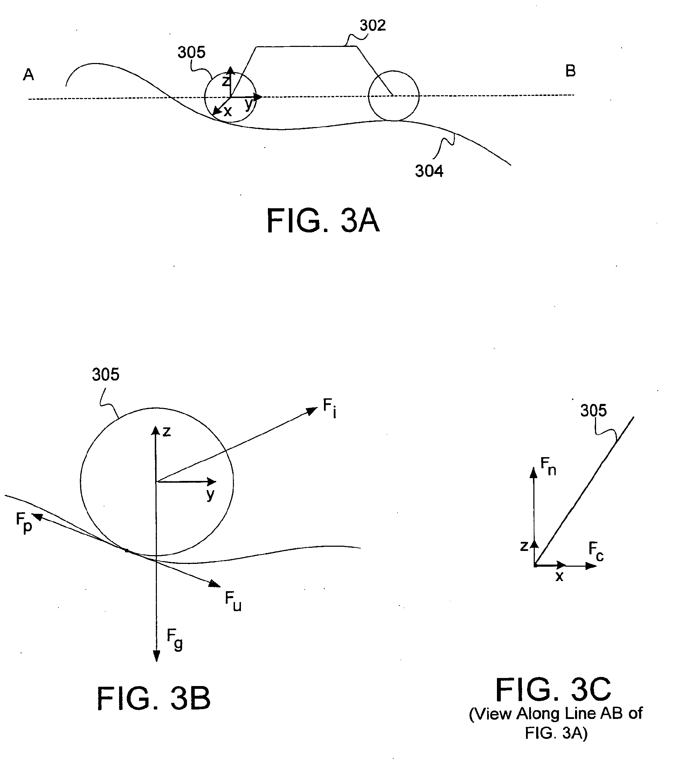

During play of a video game, a multitude of force vectors acting on a player character may be calculated. For example, FIG. 3A illustrates a bicycle 302 on a roadway surface 304, and FIG. 3B illustrates four forces acting on a wheel 305 of the bicycle 302 in the y-z plane. For ease of illustration, some of the forces are illustrated to act on a point of contact between the roadway surface 304 and the wheel 305, and other forces are shown to act on a center of mass of the wheel 305 (i.e., geometric center of the wheel in this embodiment). The forces comprise a force of gravity F_{g}, a frictional force Fᵤ, a pedaling force Fₚ (i.e., the force transferred from the bicycle pedals (not shown) via a bicycle chain (not shown) to the wheels 305 and applied to the roadway surface 304), and an impulsive force Fᵢ. The impulsive force Fᵢ is typically a force of high magnitude and short duration that may be incurred as the wheel 305 strikes irregularities in the roadway surface 304, for example.

FIG. 3C illustrates additional forces that may act on the wheel 305 as viewed along line AB (FIG. 3A), and acting on the wheel 305 in the x-z plane. These forces may comprise a lateral centripetal force F_{c} applied to the wheel 305 by the roadway surface 304 when the bicycle 302 is turning (e.g., a centripetal force is generated when the driver is leaning into a turn), and a normal force Fₙ applied perpendicular to the roadway surface 304.

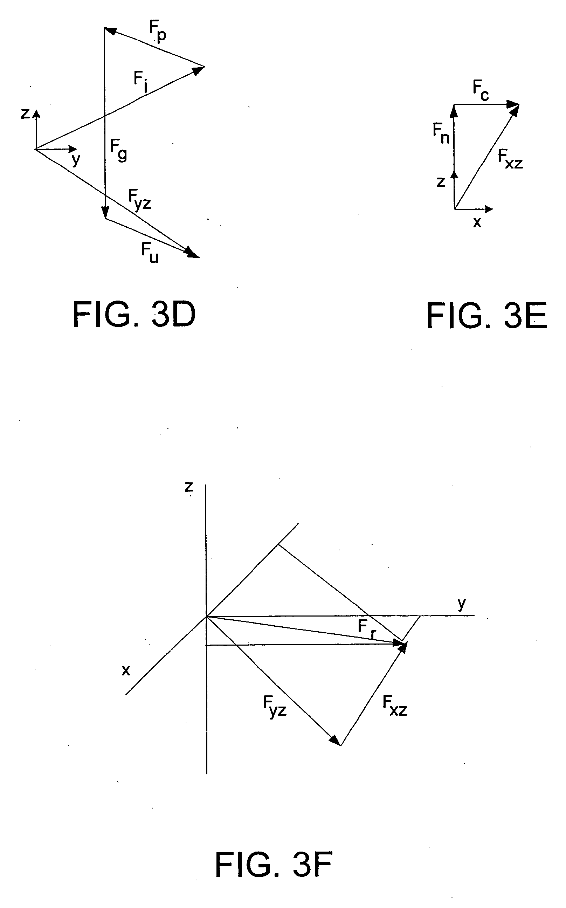

FIG. 3D shows a summation of all the forces acting on the wheel 305 in the y-z plane as illustrated in FIG. 3B as the y-z resultant force F_{yz}. FIG. 3E shows a summation of all the forces acting on the wheel in the x-z plane as illustrated in FIG. 3C as the x-z resultant force F_{xz}. Finally, FIG. 3F shows a net resultant force Fᵣ acting on the wheel 305 of the bicycle 302 as a summation of the y-z resultant force F_{yz} (FIG. 3D) and the x-z resultant force F_{xz} (FIG. 3E). A net resultant force may also be computed as a summation of resultant forces acting on other components of the bicycle 302 and on a rider (not shown) of the bicycle 302. Other forces may be computed as well, including frictional forces due to air and water (e.g., rain) resistance, and based upon bicycle speed and bicycle structural design and/or rider clothing, for example.

In game play, the net resultant forces may be recorded during a time trial, and then graphically displayed during subsequent runs to inform game players of previous actions and assist in game decisions that may improve game play performance. Additionally, the net resultant forces may be computed and graphically displayed in real time during one or more game players' current runs to provide additional information regarding path smoothness and/or locations of impediments to travel, such as obstacle or barriers. Other applications may be considered as well.

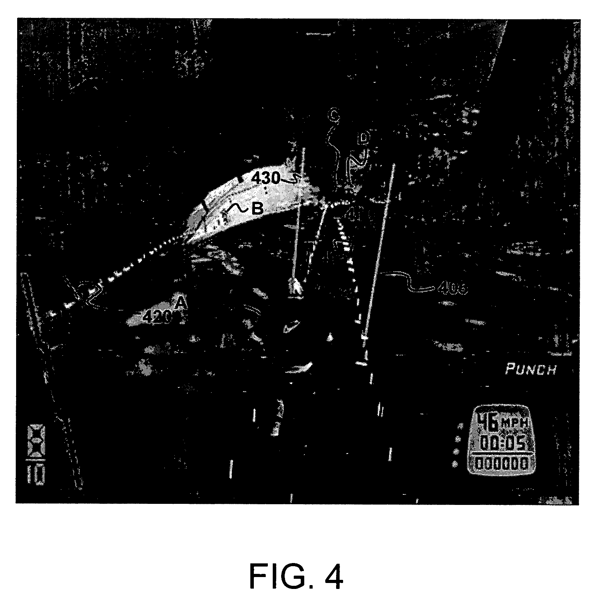

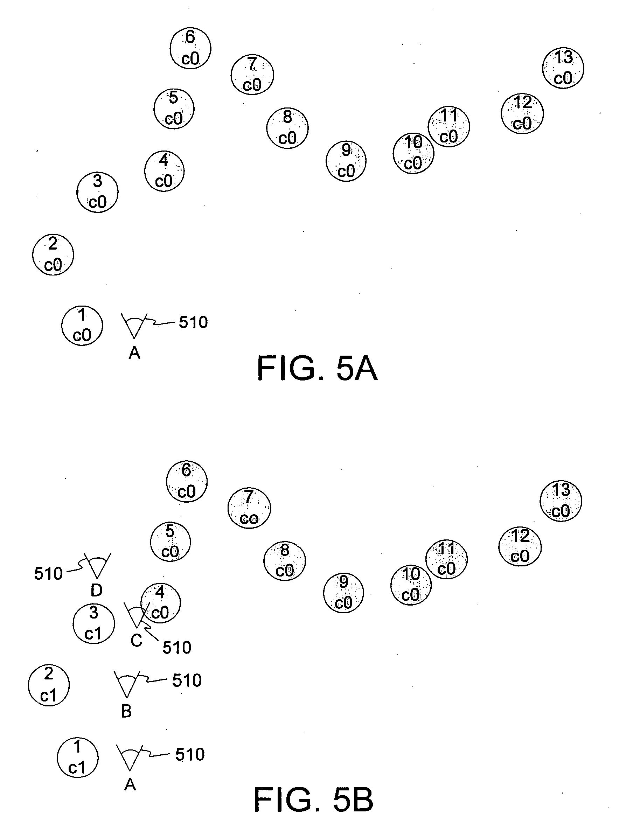

FIG. 4 is a screen-shot of net resultant force vectors as displayed at a given time during a game run from a vantage point of player character A, according to one embodiment of the present invention. In the FIG. 4 embodiment of the present invention, the CPU 112 (FIG. 1) computes and displays net resultant force vectors along paths associated with each game player. For example, net resultant force vectors, such as net resultant force vectors 405, 410, and 415 are displayed along a path traveled by player character D. Similarly, a net resultant force vector 420 is displayed along a path traveled by player character B, a net resultant force vector 425 is displayed along a path traveled by player character C, and a net resultant force vector 430 is displayed instantaneously acting on player character A (i.e., current player). Although other net resultant force vectors are computed and displayed along the paths of player characters B, C, and D, they are not readily visible in the FIG. 4A embodiment of the present invention. Therefore, only the most visible net resultant force vectors 405-430 are illustrated in this exemplary example utilizing the present invention. Each net resultant force vector of the net resultant force vectors 405-430 have a magnitude (exemplified by a vector length) and a direction. In one embodiment of the present invention, the net resultant force vectors 405-430 are colored to represent a player character's travel state. The significance of colored net resultant force vectors will be discussed further below in conjunction with path markers and FIGS. 5A-5E. Player characters B, C, and D may be other current player characters competing against player character A, previous player characters representing previous game paths, or a combination of other current player characters and previous player characters.

In another embodiment of the present invention, a player selects player character A (FIG. 4), for example, to compete in a time-trial run. Player character A then competes against a previous run as displayed via a string of net resultant force vectors. The previous run may be a previous "best time" run. The previous run force vectors not only illustrate the previous path of a player character, but also magnitude and direction of net resultant forces encountered by the player character. Player character A may use the information provided by the string of net resultant force vectors to avoid obstacles and select paths in order to improve performance.

In yet a further embodiment of the present invention, a game developer may utilize the computed and displayed net resultant force vectors to develop and debug new versions of video games, or fine tune game dynamics of existing video games. Other uses of net resultant force vectors are contemplated and covered by the present invention.

FIG. 5A is an exemplary illustration of path markers as displayed at a beginning of a time-trial run, according to one embodiment of the present invention. At the beginning of the time-trial run, a player character 510 is located at a starting position A, and path markers 1-13 represent a path of a "best time" run. In this embodiment of the present invention, the path markers 1-13 are represented by circles, however the scope of the invention covers markers of any shape or size. For descriptive purposes, FIG. 5A is an aerial view of the path markers 1-13 and the player character 510. However, during game play, a time-trial run's game environment is typically viewed from a perspective of the player character 510. For example, the player character 510 may directly observe path markers 1-13. In the FIG. 5A embodiment, since a game player has not yet initiated the time-trial run, path markers visible to the player character 510 (i.e., the path markers 1-13) are a color c₀.

FIG. 5B is an exemplary illustration of the path markers of FIG. 5A as displayed after an elapsed time *t*_{*1*} from a beginning of a time-trial run. A player character 510 travels along a path designated by positions A-D, and at time *t*_{*1*}, the player character 510 is located at the position D. However in this example, a "best time" player character (not shown) is located at a path marker 3 at time *t*_{*1*}.

In one embodiment of the present invention, the CPU 112 (FIG. 1) instructs the GPU 114 (FIG. 1) to change the color of each path marker 1-13 from c₀ to another color, dependent upon a "best time" player character state associated with each path marker, if the elapsed time t associated with each respective path marker is less than or equal to the elapsed time *t*_{*1*}. For example, in the FIG. 5B embodiment, path markers 1-3 have elapsed times *t* that are less than or equal to the elapsed time *t*_{*1*}, and the "best time" player character states associated with path markers 1-3 indicate that the "best time" player character is traveling on the ground. Therefore, the GPU 114 changes color of the path markers 1-3 from a color c₀ to a color c₁. Consequently, the path markers 4-13 with elapsed times *t* greater than the elapsed time *t*_{*1*} remain unchanged. In an alternate embodiment, the path markers 1-3 disappear from the display device (not shown), if the player character 510 is past the path markers 1-3.

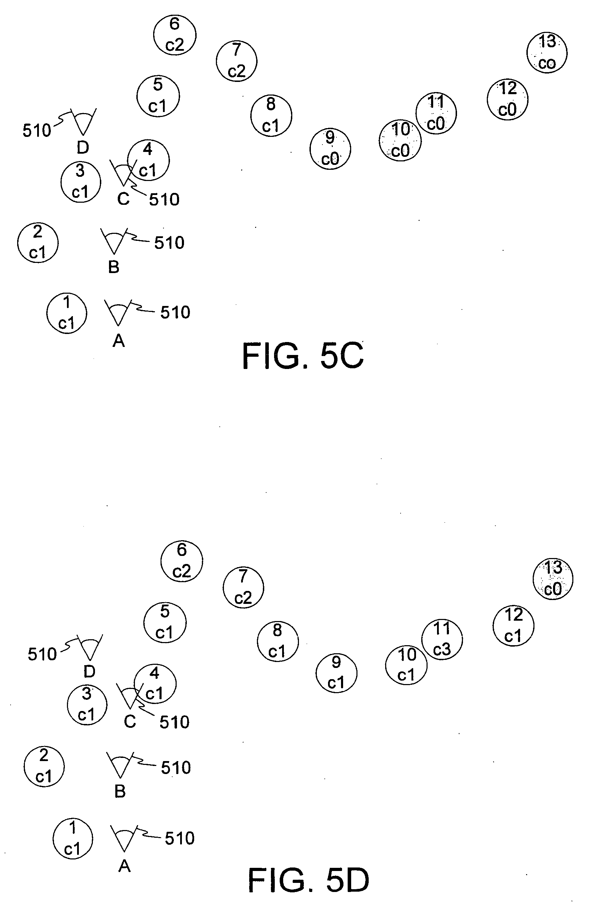

FIG. 5C is an exemplary illustration of the path markers of FIG. 5A as displayed after an elapsed time t₂ from a beginning of a time-trial run. The player character 510 travels along a path designated by positions A-D, and at time *t*_{*2*}, the player character 510 is located at a position D. However in this example, a "best time" player character (not shown) associated with a "best time" path (represented by circular path markers 1-13) is located either between path markers 8 and 9, or at the path marker 8 at the elapsed time *t*_{*2*}. Since the path markers 9-13 have elapsed times that are greater than the elapsed time *t*_{*2*}, the path markers 9-13 remain unchanged. However, because the path markers 1-8 have elapsed times less than or equal to *t*_{*2*}, the path markers 1-8 will change color. For example, since the path markers 1-5 and 8 have elapsed times that are less than or equal to the elapsed time *t*_{*2*} and since the "best time" player character states associated with the path markers 1-5 and 8 indicate that the "best time" player character is traveling on the ground, the GPU 114 changes color of the path markers 1-5 and 8 from a color c₀ to a color c₁. Furthermore, since the path markers 6-7 have elapsed times that are less than or equal to the elapsed time *t*_{*2*} and the "best time" player character states associated with the path markers 6-7 in this example indicate that the player character is airborne, the GPU 114 changes color of the path markers 6-7 from a color c₀ to a color c₂. In one embodiment of the present invention the color c₁ is green and the color c₂ is blue, although any color may be assigned to the path markers.

FIG. 5D is an exemplary illustration of the path markers of FIG. 5A as displayed after an elapsed time *t*_{*3*} from a beginning of a time-trial run. The player character 510 travels along a path designated by positions A-D, and at time *t*_{*3*}, the player character 510 is located at a position D. However, the "best time" player character (not shown) associated with a "best time" path (represented by circular path markers 1-13) is located either between path markers 12 and 13, or at the path marker 12 in this example. Since the path marker 13 has an elapsed time that is greater than the elapsed time *t*_{*3*}, the path marker 13 remains unchanged. However, because the path markers 1-12 have elapsed times less than or equal to *t*_{*3*}, the path markers 1-12 will change color. Thus in this example, since the path markers 1-5, 8-10 and 12 have elapsed times that are less than or equal to the elapsed time *t*_{*3*} and "best time" player character states associated with the path markers 1-5, 8-10 and 12 indicate that the "best time" player character is traveling on the ground, the GPU 114 changes color of the path markers 1-5, 8-10 and 12 from a color c₀ to a color c₁. Furthermore, since the path markers 6-7 have elapsed times that are less than or equal to the elapsed time *t*_{*3*} and the "best time" player character states associated with the path markers 6-7 indicate that the "best time" player character is airborne, the GPU 114 changes color of the path markers 6-7 from a color c₀ to a color c₂. Finally, since the path marker 11 has an elapsed time that is less than or equal to the elapsed time *t*_{*3*} and the "best time" player character state associated with the path marker 11 indicates that the "best time" player character crashed at a location represented by the path marker 11, the GPU 114 changes color of the path marker 11 from a color c₀ to a color c₃. In one embodiment of the present invention the colors c₁, c₂, and c₃ are green, blue and red, respectively, although any color may be assigned to the path markers. It should be noted that in the examples of FIGS. 5A-5D, not all player character states may be utilized during a trial run. For example, the "crashed" state associated with the color c₃ may not be displayed if the "best time" character did not crash during the "best time" run.

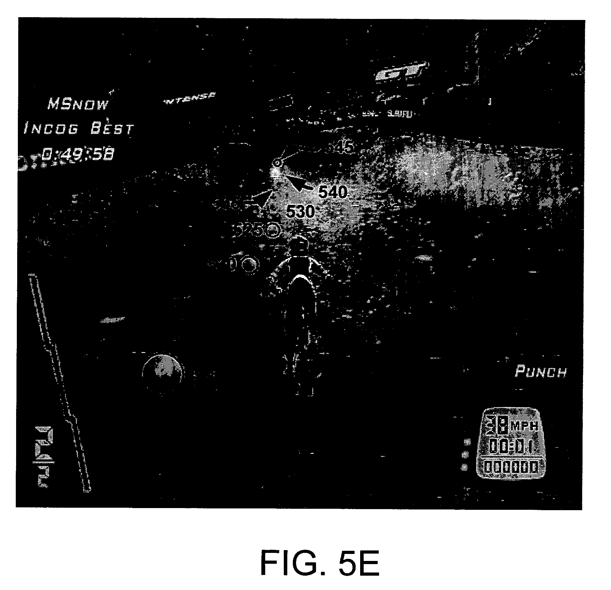

FIG. 5E is a screen-shot of path markers as displayed at an elapsed time *t*_{*4*} from a beginning of a time-trial run, according to one embodiment of the invention. FIG. 5E includes color-coded path markers 515-545 that represent a "best time" player character's "best time" path. At the elapsed time *t*_{*4*}, the "best time" player character (not shown) is located either between path markers 540 and 545 or at the path marker 540. Thus, the path markers 515-540 have a color c₁ since, in this example, the "best time" player character is traveling on the ground at each of the path markers 515-540. In this exemplary embodiment, the color c₁ associated with the path marker 540 is brighter than the color c₁ associated with the path markers 515-535, indicating that the "best time" player character is located at or near the path marker 540 at the elapsed time *t*_{*4*}. For example, the path markers 515-535 are colored green, and the path marker 540 is colored a bright green. Further, the path marker 545 has a color c₀ since an elapsed time *t* associated with the path marker 545 is greater than the elapsed time *t*_{*4*} (i.e., the "best time" player character has not yet reached the path marker 545 at the elapsed time *t*_{*4*}).

In operation, one embodiment of the present invention allows a player to view a color-coded previous game path via path markers or net resultant force vectors that dynamically change color dependent upon (1) a current elapsed time *t* associated with a current time-trial run as compared to elapsed times recorded in a previous game run and (2) previous player character states. Thus, the player can quickly gauge game progress as measured against the previous game path, and subsequently optimize variations on player character input controls as determined by viewing the previous player character state via color-coded path markers or color-coded net resultant force vectors. In one embodiment of the present invention, the previous game path is a "best time" path, and the previous player character states are the "best time" player character states.

In a further embodiment, the present invention dynamically computes net resultant force vectors in real time, and displays the net resultant force vectors along paths of one or more player characters. The net resultant force vectors may or may nor be color-coded. A non-color coded net resultant force vector displayed at a given point on a given path associated with a given player character represents the net resultant force acting on the given player character at the given point. A color-coded net resultant force vector acting on a player character offers additional game information, such as the player character state.

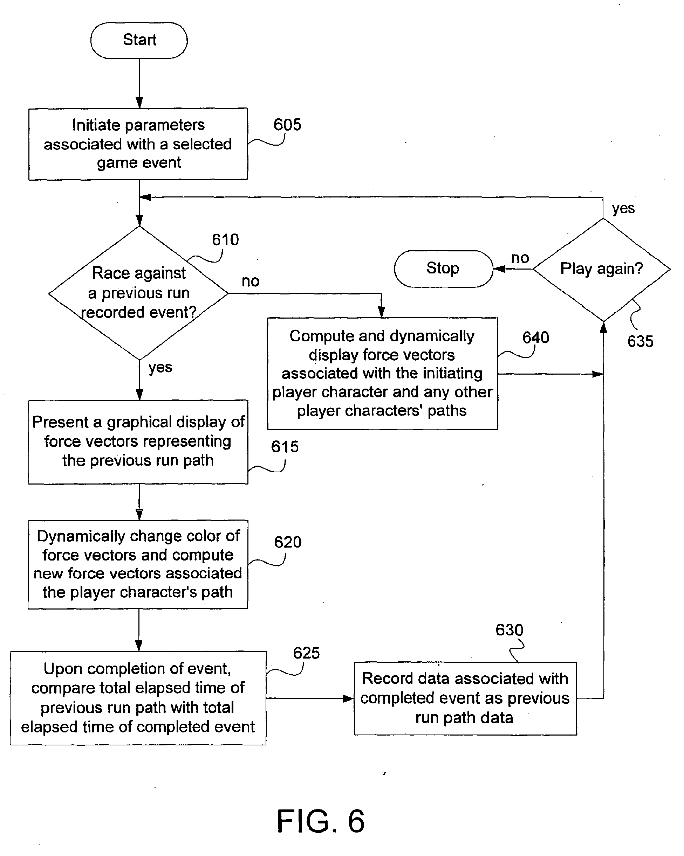

FIG. 6 is an exemplary flowchart of method steps for recording and displaying force vectors along a graphical path, according to one embodiment of the present invention. In step 605, a player of a video game loads the video game into the entertainment system 100 (FIG. 1), and selects a game event via the controller interface 120 (FIG. 1). The CPU 112 (FIG. 1) then initiates parameters associated with the selected game event. The parameters may include, though are not limited to, environmental parameters (e.g., scenery and weather), racecourse parameters (e.g., track layout and obstacles), and player character, clothing, and mode of transportation parameters (e.g., type of player and bicycle).

In step 610, the player decides whether to race against a previous run via inputs to the controller interface 120. If, in step 610, the player decides to race against the previous run, then the CPU 112 retrieves previous run path data from the memory card 122 (FIG. 1) or the previous sub-cache 210 (FIG. 2). In one embodiment of the present invention, the previous run is a "best time" run. Then, in step 615, the CPU 112 instructs the GPU 114 (FIG. 1) to display the previous run path data, including force vectors representing the previous run path, on a display device (not shown). In one embodiment of the present invention, the force vectors initially have a color c₀.

In step 620, the player initiates game play, and the CPU 112 instructs the GPU 114 to dynamically change appearance of the force vectors, such as force vector color, as a player character traverses a course associated with the selected game event. For example, the CPU 112 compares an elapsed time of the selected game event with elapsed times associated with the previous run force vectors and path markers, and changes colors of those previous run force vectors with elapsed times less than or equal to the elapsed time of the present game event. According to exemplary embodiments, the color of a given force vector changes based upon the previous character state. For example, the color of the force vector changes from the color c₀ to a color c₁ if a player character associated with the previous run event (i.e., the previous run player character) is in contact with the ground at the given path marker. In another embodiment, the color of a given force vector changes from the color c₀ to a color c₂ if the previous run player character is airborne at the given path marker. In yet a further embodiment, the color of a given force vector changes from the color c₀ to a color c₃ if the previous run player character crashes at the given path marker.

In addition, the CPU 112 computes and stores path data associated with the selected game event in the current sub-cache 220 (FIG. 2), including new force vectors associated with the current player character's path. The path data may also comprise (x,y,z) position of path markers, elapsed time at each path marker, player character state at each path marker, and other data important to graphical path characterization. Path data may comprise other or different attributes depending on the nature of the game.

In step 625, the CPU 112 compares a total elapsed time of the completed game event with a total elapsed time of the previous run event. In step 630, the CPU 112 records data associated with the completed event as previous run path data in the previous sub-cache 210. In one embodiment in which the previous run event is a "best time" event, if the CPU 112 determines that the total elapsed time of the completed game event is less than the total elapsed time of the "best time" event, then the CPU 112 transfers the path data of the completed game event from the current sub-cache 220 to the previous sub-cache 210, overwriting any "best time" data stored in the previous sub-cache 210. In alternate embodiments, the current run data may be stored as a previous run data in any of a plurality of previous "non-best time" sub-caches (not shown), or a user may chose whether to save data associated with the completed run to the previous sub-cache 210 or any of the previous "non-best time" sub-caches. Finally, the player decides whether to play again in step 635. If the player decides to play again, then the method continues at step 610. However, if the player decides to not race again, the method is complete.

Referring back to step 630, in another embodiment of the present invention the player may instruct the CPU 112 to store the path data of the completed game event on the memory card 122 (FIG. 1) to be retrieved at a later time when the player reloads the video game for another session. Referring back to step 620, in yet another embodiment of the present invention, the GPU 114 does not dynamically change color of the force vectors as a player character traverses a course associated with the selected game event. Finally, referring back to step 610, if the player decides not to race against a previous run event, then in step 640 the player initiates game play, and the CPU 112 computes and dynamically displays force vectors associated with the initiating player character and any other player characters' paths through the game environment. The method then continues at step 635.

The present invention has been described above with reference to exemplary embodiments. Other embodiments will be apparent to those skilled in the art in light of this disclosure. For example, the CPU 112 may store and retrieve data from "non-best time" sub-caches associated with "non-best time" game paths, including, but not limited to, "worst time" paths associated with a current player or any player, "average time" paths associated with a current player or any player, a previous path of a current player selected from one or more previous paths, or a previous path of another player selected from one or more of the other player's previous paths. The game software then displays the data stored in the "non-best time" sub-caches as a string of dynamically changing colored path markers in which each path marker's color conveys information. Alternatively, the game software displays the data stored in the "non-best time" sub-caches as a string of dynamically changing colored force vectors in which each force vector's color, direction, and magnitude conveys information. In one embodiment of the present invention, if a current player chooses to race against a "worst time" path, data stored in the "worst time" sub-cache is overwritten with data from the current player's game run if the total elapsed game time associated with the current player's game run is greater than the total elapsed time stored in the "worst time" sub-cache. In other embodiments of the present invention, a current player selectively chooses whether to save data associated with a completed current game run in any of the sub-caches. For example, a current player may selectively choose not to allow data associated with a completed current game run to be compiled with the data stored in an "average time" sub-cache.

The present invention may readily be implemented using configurations other than those described in the preferred embodiments above. In a further example, the present invention may be utilized in any type of racing game such as, but not limited to, car racing, horse jumping, air racing, etc.
Therefore, these and other variations upon the preferred embodiments are intended to be covered by the present invention.

Various respective aspects and features of the invention are defined in the appended claims.
Features from the dependent claims may be combined with features of the independent claims as appropriate and not merely as explicitly set out in the claims.

## Claims

1. A method for utilizing vectors in a video game, comprising:
computing a plurality of vectors along one or more graphical paths, each of the one or more graphical paths associated with a player character; and
displaying the plurality of vectors along the one or more graphical paths.

2. The method of claim 1, wherein the plurality of vectors are a plurality of net resultant force vectors.

3. The method of claim 1, wherein computing further comprises computing the plurality of vectors based upon phenomenological laws.

4. The method of claim 1, wherein the computing further comprises computing the plurality of vectors based upon physical laws of nature.

5. The method of claim 1, wherein the computing further comprises computing the plurality of vectors in real time.

6. The method of claim 1, wherein the displaying further comprises displaying the plurality of vectors along the one or more graphical paths as a plurality of colored vectors, a color of a vector of the plurality of vectors indicating a character state.

7. The method of claim 1, further comprising
retrieving previous graphical path data associated with a previous run; and displaying the previous graphical path data as a string of vectors.

8. The method of claim 7, further comprising
determining a color for a vector of the string of vectors based upon an elapsed time of a current video game session and an elapsed time associated with the vector of the string of vectors.

9. The method of claim 8, wherein the determining further comprises selecting a first color for the vector if the elapsed time associated with the vector is greater than the elapsed time of the current video game session.

10. The method of claim 8, wherein the determining further comprises selecting a color for the vector based upon a character state associated with the vector if the elapsed time associated with the vector is less than or equal to the elapsed time of the current video game session.

11. The method of claim 10, wherein the character state associated with the vector is an "on the ground" state.

12. The method of claim 10, wherein the character state associated with the vector is an "airborne" state.

13. The method of claim 10, wherein the character state associated with the vector is a "crashed" state.

14. The method of claim 7, wherein the previous run is a "best time" run.

15. The method of claim 7, wherein the previous run is a run selected from one or more previous runs.

16. The method of claim 1, further comprising storing the plurality of vectors along the one or more graphical paths to a data cache.

17. The method of claim 1, further comprising using the plurality of vectors to debug the video game.

18. An electronic-readable medium having embodied thereon a program, the program being executable by a machine to perform a method for utilizing vectors in a video game, the method comprising:
computing a plurality of resultant force vectors in real time along one or more graphical paths, each of the one or more graphical paths associated with a player character; and
displaying the plurality of resultant force vectors along the one or more graphical paths.

19. The electronic-readable medium of claim 18, wherein the displaying further comprises displaying the plurality of resultant force vectors in real time along the one or more graphical paths as a plurality of colored resultant force vectors, a color of a resultant force vector of the plurality of resultant force vectors indicating a character state.

20. The electronic-readable medium of claim 18, further comprising
retrieving previous graphical path data associated with a previous run; and
displaying the previous graphical path data as a string of resultant force vectors.

21. The electronic-readable medium of claim 20, further comprising determining a color for a resultant force vector of the string of resultant force vectors based upon an elapsed time of a current video game session and an elapsed time associated with the resultant force vector of the string of resultant force vectors.

22. The electronic-readable medium of claim 21, wherein the determining further comprises selecting a first color for the resultant force vector if the elapsed time associated with the resultant force vector is greater than the elapsed time of the current video game session.

23. The electronic-readable medium of claim 21, wherein the determining further comprises selecting a color for the resultant force vector based upon a character state associated with the resultant force vector if the elapsed time associated with the resultant force vector is less than or equal to the elapsed time of the current video game session.

24. The electronic-readable medium of claim 20, wherein the previous run is a "best time" run.

25. The electronic-readable medium of claim 18, further comprising storing the plurality of resultant force vectors to a data cache.

26. An electronic entertainment system for utilizing vectors in a video game, comprising:
a data cache configured to store graphical path data associated with a current video game session and one or more previous video game sessions;
a processor configured to compute a plurality of force vectors associated with one or more graphical paths, each of the one or more graphical paths associated with a player character; and
a display device configured to display the plurality of force vectors.

27. The electronic entertainment system of claim 26, wherein the graphical path data includes the plurality of force vectors.

28. The electronic entertainment system of claim 26, wherein the processor is further configured to compute a color of a force vector from the plurality of force vectors, the color of the vector from the plurality of force vectors indicating a character state.

29. The electronic entertainment system of claim 26, wherein the processor is further configured to retrieve the graphical path data associated with one of the one or more previous game sessions and to generate a string of force vectors.

30. The electronic entertainment system of claim 29, wherein the processor is further configured to determine a color of a force vector of the string of force vectors based upon an elapsed time of the current video game session and an elapsed time associated with the force vector.

31. The electronic entertainment system of claim 29, wherein the processor is further configured to determine a color of a force vector of the string of force vectors based upon a character state associated with the force vector.

32. The electronic entertainment system of claim 26, further comprising a memory card configured to store the graphical path data.

33. The electronic entertainment system of claim 26, wherein the processor is further configured to generate and store graphical path data of the current video game session in the data cache.

34. The electronic entertainment system of claim 27, wherein the processor is further configured to store graphical path data of the current video game session as "best time" run graphical path data if a total elapsed time of the current video game session is less than total elapsed times associated with the one or more previous video game sessions.

35. A system for utilizing vectors in a video game session, comprising:
means for computing a plurality of vectors along one or more graphical paths, each of the one or more graphical paths associated with a player character; and
means for displaying the plurality of vectors along the one or more graphical paths.
